(19) Europäisches Patentamt
European Patent Office
Office européen des brevets

(11) **EP 2 387 135 B1**

(12) **EUROPÄISCHE PATENTSCHRIFT**

(45) Veröffentlichungstag und Bekanntmachung des Hinweises auf die Patenterteilung:
**29.08.2018 Patentblatt 2018/35**

(21) Anmeldenummer: **11003434.5**

(22) Anmeldetag: **26.04.2011**

(51) Int Cl.:
***H02K 15/04*** *(2006.01)*

(54) **ELEKTROTECHNISCHE SPULE IN GUSSTECHNIK, HERSTELLUNGSVERFAHREN FÜR EINE SOLCHE SPULE UND ELEKTROMASCHINEN VERWENDEND SOLCHE SPULEN**

ELECTROTECHNICAL CAST COIL, METHOD FOR PRODUCING SUCH A COIL AND ELECTRIC MACHINES USING SUCH COILS

BOBINE ÉLECTRIQUE DANS LA TECHNIQUE DE COULÉE, PROCÉDÉ DE FABRICATION D'UNE TELLE BOBINE ET MACHINES ÉLECTRIQUES UTILISANT CES BOBINES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.05.2010 DE 102010020897**

(43) Veröffentlichungstag der Anmeldung:
**16.11.2011 Patentblatt 2011/46**

(73) Patentinhaber: **Fraunhofer-Gesellschaft zur Förderung der angewandten Forschung e.V. 80686 München (DE)**

(72) Erfinder:
• **Horch, Felix 28209 Bremen (DE)**
• **Kock, Alexander 49716 Meppen (DE)**
• **Pleteit, Hermann, Dr. rer.nat. 28215 Bremen (DE)**
• **Schmidt, Daniela 28213 Bremen (DE)**
• **Wöstmann, Franz-Josef 48163 Münster (DE)**

(74) Vertreter: **Pfenning, Meinig & Partner mbB Patent- und Rechtsanwälte Theresienhöhe 11a 80339 München (DE)**

(56) Entgegenhaltungen:
**WO-A1-02/097139        FR-A- 1 580 467
JP-A- 2004 336 969**

**Beschreibung**

I. Einführung:

Die vorliegende Erfindung bezieht sich auf gießtechnisch hergestellte Spulen und/oder Spulenwicklungen, auf Herstellungsverfahren hierfür sowie auf Elektromaschinen, z.B. Synchronmaschinen (insbesondere Drehstrom-Synchronmaschinen) oder Elektromagnete (z.B. in Form von Hubmagneten), die entsprechende Spulen einsetzen (erfindungsgemäße Verwendung der erfindungsgemäß hergestellten Spulen im Elektromaschinenbau).

Im Rahmen der vorliegenden Erfindung wird unter einer Spule ein Bauelement der Elektrotechnik verstanden: Erfindungsgemäße Spulen sind somit für beliebige Anwendungen in der Elektrotechnik, beispielsweise im Elektromaschinenbau, insbesondere im Elektromotoren- und Elektrogeneratorenbau, geeignet. Erfindungsgemäße Spulen werden nachfolgend somit auch als elektrotechnische Spulen bezeichnet.

Solche Spulen sind eines der wichtigsten Bauelemente der Elektrotechnik. Sie übernehmen verschiedenste Funktionen in elektrischen Schaltungen und elektromechanischen Anwendungen. Im Bereich des Elektromaschinenbaus sind Spulen ein wesentliches funktionales Bauelement des Motors. Je nach Klasse und Bauform des Motors weisen die Spulen unterschiedliche Geometrien, Wickelformen und Windungszahlen auf.

II. Stand der Technik und Nachteile derselben:

Die JP 2004 336 969 beschreibt ein Verfahren zum Herstellen einer elektrotechnischen Spule, wobei eine eine Spulengeometrie enthaltende Negativform bereit gestellt oder hergestellt wird und wobei ein zur Ausbildung der Windungen geeignetes Spulenmaterial (insbesondere ein elektrisch leitfähiges Metall) in flüssiger Form in diese Negativform gegossen wird, sowie wobei man anschließend dieses Spulenmaterial erstarren lässt.

Die FR 1 580 467 beschreibt ebenso ein solches Verfahren.

In Anwendungen mit hohen Anforderungen an die Drehmomentdichte werden in zunehmendem Maß permanenterregte Synchronmaschinen mit Zahnspulenwicklung verwendet. Die konzentrierte Anordnung der Wicklungen erlaubt hierbei die Fertigung der Spulen auf vorgefertigten Spulenträgern und das anschließende Aufschieben auf den Stator. Die erreichbare Drehmomentdichte hängt maßgeblich von dem Verhältnis von gesamter Kupferquerschnittsfläche zu Nutfläche, dem sogenannten Nutfüllfaktor ab. Eine Erhöhung des Füllfaktors ermöglicht bei gleich bleibendem Drehmoment einen flacheren Aufbau des Stators oder eine Verbreiterung der Zähne zur Entlastung des Magnetkreises.

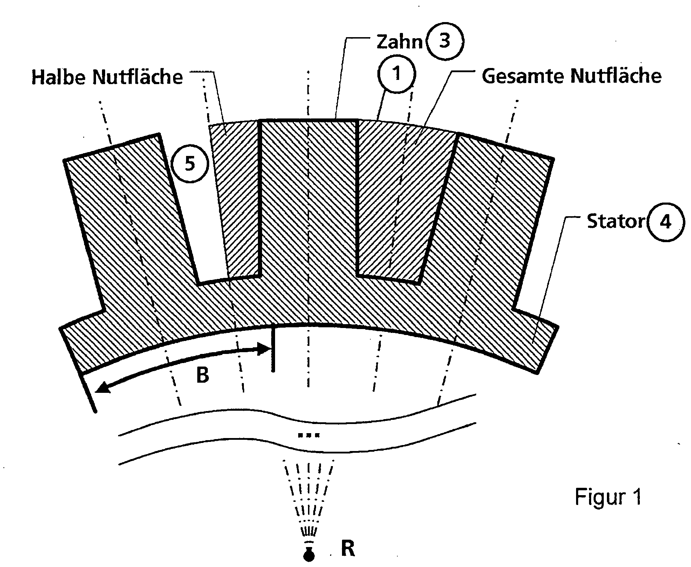

Eine grundlegende Motorgeometrie im Elektromaschinenbau zeigt Figur 1 (erfindungsgemäße Spulen können dann, wie nachfolgend noch im Detail beschrieben, beispielsweise auch in einer solchen Geometrie eingesetzt werden bzw. erfindungsgemäß an eine solche Geometrie angepasst werden; nachfolgend wird diese Geometrie jedoch zunächst im Rahmen der Schilderung des Standes der Technik erläutert): Fig. 1 zeigt exemplarisch eine hochpolige permanenterregte Synchronmaschine mit Zahnspulenwicklung in Außenläuferbauweise. Der Nutfüllfaktor F gibt das "Verhältnis der effektiven Querschnittsfläche der Kupferleiter zur theoretisch maximalen Querschnittsfläche des verfügbaren Wickelfensters" an und definiert durch:

$$F = \frac{\sum_i A_{l,i}}{A_N}$$

Eine wesentliche geometrische Einschränkung liegt im Stand der Technik in den beschränkten Möglichkeiten zum Einsatz unterschiedlicher Windungsquerschnitte: Üblicherweise kommen Runddrähte für die Wicklungen zum Einsatz, bei denen selbst bei optimaler Ausnutzung immer ein nicht nutzbarer Zwischenraum zwischen den einzelnen Wicklungen verbleibt. Auch die notwendige Isolation, die Drahteinführung und die diskrete Verteilung der Leiter begrenzen den Füllfaktor. Da der letztendlich erzielte Nutfüllfaktor zudem bei der elektromagnetischen Auslegung nur geeignet geschätzt und aufgrund der Unkenntnis der späteren tatsächlichen Ausführung des Motors nicht berechnet werden kann, werden die Motoren aufgrund der höheren notwendigen Massen (Kupfer der Wicklungen und Blechpakete des Stators und des Rotors) tendenziell (zu) schwer und (zu) groß.

Die wesentliche fertigungstechnische Schwierigkeit besteht im Aufbringen der Wicklungen auf den Zahn. Gemäß des Stands der Technik sind mehrere konventionelle Fertigungsverfahren bekannt. Ein Verfahren zur maschinellen Herstellung ist die Nadelwickeltechnik, bei der die Drähte einzeln durch das Fenster zwischen zwei Zähnen hindurchgeführt werden. Hierfür ist ein bestimmter Freiraum erforderlich, der konstruktiv berücksichtigt werden muss und sich negativ auf den Füllfaktor auswirkt. Eine weitere Möglichkeit ist das so genannte "Einträufeln" von Wicklungen in das Nutfenster über den Zahn hinweg. Dies ist jedoch ein Vorgang, der manuell durchgeführt wird und daher entsprechend kostenintensiv ist.

Zusammenfassend lässt sich feststellen, dass mit den heute üblichen Verfahren der Herstellung von Spulenwicklungen technische und wirtschaftliche Grenzen der Nutfüllung mit einzelnen Windungen bestehen. Ein Nutfüllfaktor von 70 % ist bereits ein sehr guter Wert, die technisch wie wirtschaftlich sinnvoll machbaren Grenzen liegen momentan bei ca. 75 % bis 80 % (Quelle: Müller, Vogt, Ponick: "Berechnung elektrischer Maschinen", S. 168, 6. Auflage, Wiley-VCH, Weinheim, 2008). Weiterhin führt die Unkenntnis über die genaue Führung der Wicklungen im Nutfenster meist zu schwereren und vom Platzbedarf her ungünstigeren Konstruktionen.

### III. Aufgabe der Erfindung:

Ausgehend vom Stand der Technik ist es die Aufgabe, eine (elektrotechnische) Spule zum Erzielen eines erhöhten Füllfaktors bzw. Nutfüllfaktors zur Verfügung zu stellen, die auf zuverlässige und einfache Art und Weise reproduzierbar wirtschaftlich hergestellt werden kann. Aufgabe ist es darüberhinaus, ein entsprechendes Herstellungsverfahren zur Verfügung zu stellen. Schließlich umfasst die Erfindung entsprechende Elektromaschinen (insbesondere Elektromotoren oder Drehstrom-Synchronmaschinen), die mindestens eine erfindungsgemäße Spule für ihren Betrieb einsetzen. Schließlich umfasst die vorliegende Erfindung auch die Verwendung erfindungsgemäßer elektrotechnischer Spulen in den vorstehend genannten Elektromaschinen bzw. elektrischen Maschinen.

### IV. Von der Erfindung vorgeschlagene Lösungen:

Die vorstehende Aufgabe wird durch ein Verfahren gemäß Anspruch 1, durch elektrotechnische Spulen gemäß der Ansprüche 7 bis 9, durch Elektromaschinen gemäß Anspruch 10 sowie durch Drehstrom-Synchronmaschinen gemäß Anspruch 11 gelöst. Vorteilhafte Ausführungsvarianten lassen sich dabei jeweils den abhängigen Ansprüchen entnehmen.

Nachfolgend wird die vorliegende Erfindung zunächst allgemein, dann anhand eines speziellen Ausführungsbeispiels beschrieben. Die im Rahmen des Ausführungsbeispiels geschilderten einzelnen Merkmale des Ausführungsbeispiels müssen dabei im Rahmen der Erfindung (also des durch die Patentansprüche vorgegebenen Schutzumfangs) nicht in der im Ausführungsbeispiel gezeigten Merkmalskombination verwirklicht sein, sondern können auch unabhängig voneinander in anderen Konfigurationen realisiert werden. Insbesondere können auch einzelne der im Ausführungsbeispiel gezeigten Merkmale weggelassen werden oder andere Merkmale hinzugefügt werden.

### IV.1. Grundlegende Definitionen:

Wird nachfolgend im Rahmen der Erfindung von einer Spulengeometrie (oder kurz: Geometrie) gesprochen, so ist damit eine Form einer Spule im Raum gemeint. In der Regel handelt es sich bei einer solchen Geometrie bzw. Form um eine dreidimensionale Form, dies schließt jedoch nicht aus, dass eine erfindungsgemäße Spule eine im Wesentlichen flache oder zweidimensionale Form annimmt. Wird nachfolgend von einer eine (Spulen-)Geometrie enthaltenden Negativform gesprochen, so ist damit gemeint, dass in einer Gussform ein Hohlraum (oder mehrere verbundene Hohlräume) herausgearbeitet ist/sind, in die das zur Ausbildung der Wicklungen der Spule geeignete Spulenmaterial (siehe nachfolgend) gegossen werden kann. Nach einem entsprechenden Abguss von Wicklungsmaterial in die Negativform liegt somit eine Positivform, also die gegossene Spule, vor. Nachfolgend wird der Begriff der Spulengeometrie sowohl für den/die Hohlraum/Hohlräume der Negativform, als auch für die fertig gegossene Spule verwendet. Dem Fachmann erschließt sich jeweils aus dem Zusammenhang, was gemeint ist.

Beispielsweise kann eine erfindungsgemäße Spule im Rahmen einer (elektrotechnischen) Anordnung eingesetzt werden. Eine solche Anordnung kann einen Rotor und einen zugehörigen Stator umfassen. Durch einen Stator und/oder durch dessen zugehörigen Rotor, also durch die entsprechende Anordnung dieser Bauteile, wird eine geometrische Bezugsgröße, die Rotationsachse definiert, die eine räumliche Bezugslinie bildet. Bei der Anordnung kann es sich um einen Elektromotor handeln, bei dem der Stator in oder an einem Innenläufer realisiert ist und erfindungsgemäße Spulen Trägerzähne des Stators umfassen. Ebenso können die erfindungsgemäßen Spulen in oder an einem Außenläufer realisiert sein.

### IV.2. Grundlegende Erfindungskonfiguration und vorteilhafte Ausführungsformen derselben:

Ein bekanntes Verfahren zur Spulenherstellung umfasst die folgenden Schritte: Eine eine vorbestimmte Spulengeometrie enthaltende Negativform wird bereit- oder hergestellt, anschließend wird ein zur Ausbildung der Windungen der Spule geeignetes Spulenmaterial in flüssiger Form in diese Negativform gegossen und/oder mit Druckunterstützung eingebracht und schließlich wird dieses Spulenmaterial erstarrt (wobei nachfolgend hierunter auch verstanden wird, dass man dieses Spulenmaterial passiv, d.h. durch Zeitablauf, also rein durch Abkühlung, erstarren lässt). Das Gießen des Spulenmaterials kann in verlorene Formen, verlorene Modelle oder auch in Dauerformen erfolgen, beim Spulenmaterial handelt es sich insbesondere um ein elektrisch leitfähiges Metall oder um eine Legierung in flüssiger Form (z.B. Aluminium oder Kupfer), so dass die verwendeten Negativformen bzw. Gussformen eine entsprechende physikalische Beständigkeit (insbesondere Temperaturbeständigkeit und mechanische Stabilität) aufweisen müssen. Der Begriff der Windung wird hier in dem Sinne verstanden, dass eine Spule all ihre einzelnen Windungen umfasst, dass also eine Mehrzahl einzelner Windungen zusammen die Spule ergeben; synonym dazu wird im Rahmen der Erfindung von den einzelnen Wicklungen der Spule gesprochen. Bekannterweise wird in einem weiteren Verfahrensschritt das erstarrte Spulenmaterial mit einer Isolation versehen, d.h. die einzelnen gegossenen Spulenwicklungen werden mit einer entsprechenden Isolationsschicht ummantelt. Vorteilhafterweise geschieht dies durch einen Beschichtungsprozess, insbesondere durch Aufbringen eines Isolierlackes, durch einen CVD- oder einen PVD-Prozess. In der Regel ist es zum Durchführen dieser Isolationsbeschichtung notwendig, dass die durch das Gießen unmittelbar erhaltene Spulengeometrie (Spulenvorgeometrie), also die erstarrte Form des Spulenmaterials, von der endgültig gewünschten Spulengeometrie (Spulenendgeometrie) abweicht. Dies liegt in der Regel daran, dass zum Sicherstellen einer vollständigen Ummantelung bzw. Isolation der einzelnen Spulenwicklungen und/oder zum Sicherstellen der Formstabilität ein größerer Wicklungsabstand notwendig ist als für die endgültige Spulenform gewünscht. Nach dem Isolieren der Wicklungen des erstarrten Spulenmaterials kann somit ein weiterer Schritt (Umformschritt) erfolgen:

Das Zusammenpressen der erstarrten, elektrisch isolierten Wicklungen bzw. der Spule in die Spulenendgeometrie. Es ist aber auch denkbar, die Isolation nach dem Umformen aufzubringen.

Für eine einfache und reproduzierbare Umformung der Spulenvorgeometrie in die Spulenendgeometrie ist es vorteilhaft, das erstarrte Spulenmaterial einer Wärmebehandlung, insbesondere einem Weichglühen, zu unterziehen. Dies geschieht vorteilhafterweise bevor das so wärmebehandelte Spulenmaterial mit der Isolationsschicht ummantelt und anschließend in die Spulenendgeometrie umgeformt wird.

Das Verfahren kann grundsätzlich mit jedem dem Fachmann bekannten Gießverfahren durchgeführt werden. Nachfolgend im Rahmen der Beschreibung konkret aufgeführte (Guss-)Verfahrensschritte sind somit nicht einschränkend und lediglich als Beispiel zu sehen. Besonders vorteilhaft kann das erfindungsgemäße Herstellungsverfahren mittels Feinguss realisiert sein.

Das Verfahren zum Herstellen einer elektrotechnischen Spule kann somit beispielsweise die folgenden Schritte umfassen:

    1. Konstruktion der Spulenendgeometrie (beispielsweise mittels CAD).

    2. Auseinanderziehen dieser Spulenendgeometrie in diejenige Spulengeometrie, die in der zum Abguss verwendeten Negativform enthalten sein soll (also in der Regel in die Spulenvorgeometrie). Hiermit wird der notwendige Abstand der Wicklungen eingestellt, dies kann beispielsweise mittels FEM-Simulationen erfolgen. Der Abstand wird durch den machbaren Umformgrad, die gießtechnischen Anforderungen und die Art des Isolationsauftrags definiert.

    3. Herstellen einer geeigneten Negativform in einem Formwerkstoff (beispielsweise aus einer Einbettmasse oder aus metallischen Werkstücken, dies gilt für Druckguss oder Kokillenguss) oder Herstellen eines entsprechenden Positivmodells, welches dann in einem geeigneten Formstoff (beispielsweise Sand oder Einbettmasse) eingebettet wird und ggf. nach Abdruck als endgültige, zum Gießen des Spulenmaterials verwendete Negativform wieder entfernt wird oder während des Gießens zersetzt wird (gilt beispielsweise für Sandguss, Feinguss oder das sogenannte Lost Foam-Verfahren). Die im Formwerkstoff bzw. im Formstoff erhaltene Hohlgeometrie dient somit als Negativform zum Gießen des zur Ausbildung der Wicklungen der Spule geeigneten Spulenmaterials. Die entsprechenden vorgenannten Gussverfahren sind dem Fachmann dabei grundsätzlich bekannt.

    4. Abgießen des Spulenmaterials in die Negativform (gravitations- und/oder druckunterstützt).

    5. Optimal kann anschließend das Entformen und Säubern des abgegossenen Spulenmodells erfolgen.

    6. Optional kann schließlich ein Weichglühen des (ggf. gesäuberten) Spulenmodells erfolgen.

    7. Nun kann ein Aufbringen der Isolation (beispielsweise durch Eintauchen in Isolationslack oder durch einen Beschichtungsprozess) erfolgen.

    8. Schließlich erfolgt ein Zusammenpressen der abgegossenen, ggf. gesäuberten und ggf. weichgeglühten Spule in die Spulenendgeometrie.

Die Schritte 7. und 8. können auch in umgekehrter Reihenfolge durchgeführt werden.
In einer weiteren Variante des Verfahrens kann der Hohlraum der Negativform (also der der Spulengeometrie entsprechende Hohlraum) evakuiert oder mit einem Unterdruck beaufschlagt werden: Dies geschieht so, dass eine Druckdifferenz entsteht, die das in flüssiger Form vorliegende Spulenmaterial beim Gießvorgang in diesen Hohlraum hineinzieht. Alternativ oder kumulativ hierzu ist es auch möglich, einen Schmelztiegel (oder ein anderes Gefäß, in dem das Spulenmaterial in flüssiger Form vorgehalten wird) in einer Schutzgasatmosphäre zu betreiben. Diese zusätzlichen Verfahrensschritte dienen dazu, den Einschluss von Gas (z.B. Luft und/oder Sauerstoff) im gegossenen Spulenmaterial zu vermeiden. Schließlich kann, für die Verwendung der wie vorstehend gegossenen Spule im Elektromaschinenbau, die fertig gegossene, isolierte Spule formschlüssig so in eine Vertiefung oder einen Hohlraum (beispielsweise in eine Nut eines Stators) eingebracht werden, dass sie einen der Vertiefung oder dem Hohlraum benachbarten Vorsprung (insbesondere einen Zahn des Stators) umfasst, umgreift, umringt oder umwickelt. Diese formschlüssige Einpassung (die Wicklungen sollen möglichst dicht am Zahn des Stators liegen) ist durch die Anpassung der Spulenendgeometrie an den zu füllenden Hohlraum erfindungsgemäß mit sehr hohen Füllgraden möglich. (Selbstverständlich ist es grundsätzlich auch denkbar, sofern in einem Anwendungsfall entsprechend geringe Ströme zu erwarten sind und eine höchstmögliche Optimierung des Füllfaktors nicht notwendig ist, die Isolationsschicht um die Wicklungen wegzulassen, also eine Isolation ausschließlich durch den Hub der Spule, also durch den Abstand benachbarter Windungen bzw. die Luft dazwischen zu realisieren).

Das Gießen des Spulenmaterials in die Negativform kann mittels unterschiedlicher Gussverfahren erfolgen: Besonders bevorzugt wird eines der folgenden dem Fachmann bekannten Verfahren eingesetzt: Feinguss, Schleuderguss, Vakuumguss oder Niederdruckguss.

Eine erfindungsgemäße elektrotechnische Spule wird nach einem Verfahren nach Anspruch 1 hergestellt. Eine elektrotechnische Spule mit einer oder mehreren Wicklung(en) kann hergestellt sein durch das Gießen eines zur Ausbildung der Wicklung(en) geeigneten Spulenmaterials (insbesondere eines elektrisch leitfähigen Metalls wie Kupfer oder Aluminium) in eine eine Spulengeometrie enthaltende Negativform und das erstarren und/oder das Erstarrenlassen dieses Spulenmaterials in dieser Negativform. Diese Spule kann desweiteren vorteilhafterweise hergestellt sein durch den vorstehend beschriebenen Guss- und Erstarrungsschritt sowie zusätzlich durch das Ummanteln, insbesondere das Beschichten, des erstarrten Spulenmaterials mit einer Isolation zum elektrischen Isolieren der Wicklungen und/oder das Umformen (insbesondere das Zusammenpressen oder Auseinanderziehen) der durch die in der Negativform enthaltene Spulengeometrie bedingten geometrischen Ausgangsform des erstarrten Spulenmaterials, also der Spulenvorgeometrie, in/zu eine(r) von dieser Ausgangsform abweichende(n) geometrische(n) Endform, die/der Spulenendgeometrie. Bevorzugt ist die erfindungsgemäße Spule hierbei hergestellt, indem zunächst das Ummanteln und anschließend das Umformen erfolgt.

Eine erfindungsgemäße Spule ist zumindest in Abschnitten zum formschlüssigen Umgeben eines Vorsprungs (insbesondere eines Zahns eines Stators) und/oder zumindest abschnittsweise zum formschlüssigen Einbringen in eine Vertiefung (insbesondere in eine Nut des Stators) ausgebildet. Dafür ist de geometrische Konfiguration der erfindungsgemässen Spule wie folgt: Die vorbeschriebene Vertiefung (oder ein entsprechender Hohlraum) wird durch einzelne, abschnittsweise jeweils parallel zueinander bzw. in Form einer Wendel verlaufende flache Wicklungen (ggf. nach einem Umformschritt wie vorstehend beschrieben) formschlüssig aufgefüllt. Erfordert die Geometrie der aufzufüllenden Vertiefung (beispielsweise bei Nuten zwischen radial nach außen stehenden Zähnen eines Stators) zum formschlüssigen Auffüllen in eine Vorzugsrichtung (beispielsweise in Radialrichtung) gesehen eine Verbreiterung der einzelnen Spulenwicklungen senkrecht zu dieser Richtung, so erfolgt gleichzeitig mit zunehmender Breite eine Verringerung der Ausdehnung der einzelnen Wicklungen senkrecht zur Breite (also eine Verringerung der Höhe der Spulenwicklungen) in eben dieser Vorzugsrichtung. Die Zunahme der Breite und die Verringerung der Höhe sind dabei vorteilhafterweise exakt so aufeinander abgestimmt, dass die Querschnittsfläche der einzelnen Windungen konstant bleibt.

Mit zunehmendem radialen Abstand von der Rotationsachse und/oder vom Zentrum eines Stators kann die Höhe der Spulenwicklungen somit so abnehmen und die Breite dieser Spulenwicklungen in einer Richtung in der Querschnittsebene der Wicklungen und senkrecht zur Radialrichtung so zunehmen, dass die einzelnen Wicklungen eine konstante Querschnittsfläche aufweisen.

Selbstverständlich kann eine durch die Negativform erzielte Spulen(vor)geometrie mit im Querschnitt rechteckigen Wicklungen durch entsprechende Ausgestaltung des Hohlraums der Negativform an nahezu beliebige Maschinengeometrien so angepasst werden, dass ein formschlüssiges Auffüllen von Vertiefungen, Hohlräumen und/oder Nuten in diesen Maschinengeometrien möglich ist. Die Optimierung des Füllgrads kann somit erfindungsgemäß bei nahezu beliebigen Maschinengeometrien erfolgen.

In der vorbeschriebenen Rotor/Stator-Geometrie sind vorteilhafterweise die Wicklungen der Spule abschnittsweise mit ihrer Wicklungsquerschnittsebene entlang eines Kreisbogenabschnitts um die Rotationsachse herum angeordnet, wobei dann bei diesen Wicklungen die Breite jeweils größer ist als die Höhe.

Eine erfindungsgemäße Elektromaschine (z.B. Elektromotor) weist mindestens eine, bevorzugt mehrere elektrotechnische Spulen wie vorstehend beschrieben auf.

Eine erfindungsgemäße Drehstrom-Synchronmaschine (z.B. permanentmagneterregte Synchronmaschine in Zahnspulentechnik) mit einem Rotor und einem Stator zeichnet sich dadurch aus, dass in dem Stator Vorsprünge des Stators ausbildende Vertiefungen (Nuten) eingebracht sind und dass in diesen Vertiefungen jeweils erfindungsgemäße elektrotechnische Spulen formschlüssig und/oder mit optimiertem Füllgrad angeordnet sind.

Ein wesentliches Merkmal der vorliegenden Erfindung ist somit der Einsatz dem Fachmann an sich gut bekannter und beherrschbarer gießtechnischer Verfahren (beispielsweise Feinguss) zur Herstellung der erfindungsgemäßen Spulen bzw. Spulenwicklungen. Wichtig ist eine reproduzierbare Prozessführung, bei der ein Zutritt von Luftsauerstoff möglichst verhindert und Oxid sowie Poren- und Lunkerbildung vermieden wird. Hierbei werden die Spulenwicklungen gießtechnisch möglichst endkonturnah hergestellt (und z.B. anschließend auf Statorzähne aufgebracht). Hierdurch lässt sich der erwünschte hohe Füllfaktor sowohl bereits während der Konstruktion definieren als auch durch eine entsprechende Anpassung der einzelnen Wicklungen bzw. Windungen (hinsichtlich ihres Querschnitts, ihrer Höhe und/oder ihrer Breite) an die Geometrie des aufzufüllenden Hohlraums (Nut) maximieren. Der erreichbare Füllfaktor wird dann bei weitestgehender gestalterischer Freiheit praktisch nur noch von den notwendigen Isolationsschichtdicken begrenzt.

Erfindungsgemäß erfolgt somit eine Herstellung von Spulenwicklungen mittels einer Gusstechnik, so dass die in einer vordefinierten speziellen Geometrie gegossenen Spulenwicklungen eine optimale Ausnutzung der zur Verfügung stehenden Nutfläche ermöglichen. Der Gießvorgang erfolgt in der Regel wie folgt:

1. Geometrische Konstruktion der Spulenwicklung(en).
2. Herstellung der Modelle zum Gießen (Negativform).
3. Durchführen des Gussvorgangs gemäß dem ausgewählten Gussverfahren.
4. Herstellung der Endkontur der Spule sowie der Isolationssicherheit (Umformen in die Spulenendgeometrie).

Die gießtechnische Herstellung ermöglicht dabei eine weitgehend freie Gestaltung der Windungsgeometrie, wodurch das zur Verfügung stehende Nutfenster maximal ausgefüllt werden kann. Hierzu kann zunächst aus der elektromagnetischen Auslegung der Maschine heraus ein notwendiger Leiterquerschnitt bei gegebenen Phasenströmen und zu erzielenden Leistungen bzw. Drehmomenten definiert werden. Diese Querschnittsfläche eines Leiters $A_1$ kann dann konstant gehalten werden. Um die Nutfläche mit Leitern von gleich bleibendem Querschnitt maximal auszufüllen (optimierter Füllgrad), kann wie vorstehend beschrieben die Höhe der einzelnen Leiter bzw. Wicklungen als Funktion des radialen Abstands r verändert werden. Darüber hinaus kann es notwendig sein, dass die Leiter dann der Krümmung des Nutbodens folgen und damit einen bogenförmigen Verlauf aufweisen müssen. Nach jeder Windung kann der Leiter auf die nächste Windungslage geführt werden, der Übergang erfolgt hierbei jeweils durch eine Steigung am Wickelkopf.

Aus fertigungstechnischer Sicht ist es vorteilhaft, dass die Konstruktion des gießtechnisch herzustellenden Halbzeugs in Form einer Spulenvorgeometrie von der Endkontur der Spule abweicht. In der Regel ist nämlich gießtechnisch ein bestimmter Abstand (in der Regel 1 bis 2 mm) zwischen den einzelnen Windungen erforderlich. Durch z.B. ein Beschichtungsverfahren werden die gegossenen Spulen anschließend mit einer Isolationslage beschichtet und durch Zusammenpressen (Umformung) in die Spulenendgeometrie (Endkontur) gebracht. Die hierfür notwendigen plastischen Verformungen sind bei der Konstruktion des Modells zu berücksichtigen.

Für die gießtechnische Serienherstellung der Spulenwicklungen gemäß der Erfindung bietet sich beispielsweise die Feingusstechnik an: Hierfür ist jeweils die Herstellung eines Positivmodells erforderlich, welches die Geometrie des späteren Gussstücks, also der Spule in Spulenvorgeometrie, aufweist, und meistens aus ausschmelzbarem Wachs oder alternativen Modellwerkstoffen, wie beispielsweise Polymeren, besteht. Die Modelle können dabei mittels unterschiedlicher Verfahren hergestellt werden, beispielsweise mittels eines Rapid-Prototyping-Verfahrens (Multijet Modelling oder ähnliches), welches auch im Bereich der Zahntechnik zum Einsatz kommt. Dabei wird die Modellgeometrie in der Regel schichtweise aus Wachs oder Thermoplasten in einer Art Druckprozess herausgearbeitet, wobei es darauf ankommt, dass sich die einzelnen Schichten ohne Lufteinschlüsse oder deutlich sichtbare Stufen im Modell abbilden und eine entsprechende Oberflächengüte im späteren Gussstück ermöglichen.

Für die Herstellung von Positivmodellen können auch andere generative Verfahren, wie z.B. das Drucken von Sandformen oder das Ausfräsen von mehrteiligen Sandformen zum Einsatz kommen. Ebenso ist es denkbar, die Positivmodelle mittels Dauerformen herzustellen, wie dies z.B. beim Lost Foam-Verfahren üblich ist. Bei entsprechender geometrischer Auslegung und Anpassung des Umformprozesses ist auch der Druckguss oder Kokillenguss denkbar. Bei komplexen Geometrien können erfindungsgemäß auch mehrteilige Segmente zum Einsatz kommen, die vor oder während des Umformprozesses gefügt werden (dies gilt beim Herstellen eines Positivmodells ebenso wie beim Herstellen der als Gussform für das Wicklungsmaterial verwendeten Negativform). Beim sog. Lost Foam-Verfahren kann die Spulenvorgeometrie aus expandiertem Polystyrol-Schaum (EPS) hergestellt werden. Dies geschieht entweder durch mechanische Bearbeitung (CNC-Fräsen) oder durch einen Schäumvorgang in einer Form. Damit auch Hinterschnitte realisiert werden können, kann das Modell (die Spulenvorgeometrie) aus mehreren Segmenten zusammengesetzt und verklebt werden. Beim Gießen selbst wird die Modellgeometrie in Formsand eingebettet und von der Schmelze beim Abguss zersetzt. Die Schmelze erstarrt dann in der Form der Modellgeometrie.

Beim Feinguss kann das Positivmodell in einer speziellen Masse eingebettet werden, aus der der Modellwerkstoff beispielsweise ausgebrannt werden kann. Zurück bleibt dann die Negativform, in die das flüssige Wicklungsmaterial abgegossen wird. Zum Unterstützen des Gießprozesses, insbesondere bei kleinen Querschnitten, kann die Temperatur der Form angepasst werden (die untere Grenze bildet hier die Schmelztemperatur des Spulenmaterials). Hierbei ergeben sich weitere zum Gießen des Wicklungsmaterials einsetzbare Prozessvarianten, wie beispielsweise Schleuderguss, Vakuumguss, Niederdruckguss oder entsprechende Varianten dieser Verfahren.

Denkbar ist beim Feinguss z.B. der Einsatz einer Phosphat-gebundenen Einbettmasse mit den Hauptbestandteilen Quartz, Feldspat und Cristobalit. Diese findet beispielsweise in der Zahntechnik Einsatz.

Die Form wird in der Regel in temperaturgeregelten Ofen erwärmt und auf bestimmtem Temperaturniveau für festgelegte Haltezeiten eingestellt. Die Endtemperatur richtet sich nach dem verwendeten Gusswerkstoff. Zum Ausbrennen werden je nach Modellwerkstoff verschiedene Ausbrennparameter verwendet. Das Aufheizen der Form kann von Raumtemperatur aus erfolgen oder bei bestimmten höheren Starttemperaturen beginnen.

Als Material für die Spulenwicklungen kann grundsätzlich jedes elektrisch leitfähige und für das Gießverfahren geeignete Material verwendet werden. Insbesondere ist der Einsatz von Kupfer, Aluminium oder Silber (Reinheitsgrad i.d.R. größer als 98%) vorteilhaft. Primär sind hier jeweils möglichst reines Kupfer oder reines Aluminium zu verwenden, wobei ggf. auch Legierungen denkbar sind. Die Anforderungen an den Werkstoff und das Gießverfahren werden aus elektrotechnischer und elektromagnetischer Sicht spezifiziert.

Sofern nachfolgend nichts anderes gesagt, beziehen sich die nachfolgenden Beschreibungen beispielhaft auf Kupfer als Werkstoff für die Wicklungen.

Um Verunreinigungen beispielsweise durch Oxidbildung in den späteren Wicklungen zu vermeiden, kann zunächst ein spezielles Verfahren der Behandlung der Schmelze eingesetzt werden: beispielsweise kann ein Vakuum an die zum Gießen verwendete Negativform angelegt werden, welches durch die entstehende Druckdifferenz zwischen dem Hohlraum der Negativform und einer Schmelzbadoberfläche des zum Gießen verwendeten Schmelzbades zu einem Hineindrücken der Schmelze aus dem Schmelzbad bzw. dem verwendeten Tiegel über ein Steigrohr in die Form führt. Da die Schmelze auf diese Weise nicht mit Luftsauerstoff in Kontakt kommt, ergibt sich eine ausreichend hohe Reinheit. Unter Umständen kann der Schmelztiegel bzw. das Schmelzbad auch in einer Schutzgasatmosphäre betrieben werden, um Reaktionen mit Luft zu mindern.

Wie vorstehend erwähnt, muss in der Regel nach der gießtechnischen Herstellung der Spulenwicklungen noch die endgültige Geometrie (Spulenendgeometrie) und hier insbesondere ein möglichst kleiner Abstand zwischen den einzelnen Windungen eingestellt werden. In der Regel muss dieser Abstand einerseits so groß sein, dass sich eine entsprechende Isolationsschicht noch prozesssicher aufbringen lässt, andererseits muss er im Sinne der Maximierung des Füllfaktors in der Endkontur möglichst klein werden (z.B. einen Abstand von 0,1 mm).

Hierzu kann das Gussstück nach dem Ausformen und Säubern zunächst durch Weichglühen einer Wärmebehandlung unterzogen werden, die für eine leichtere Verformbarkeit des Materials während der Umformung sorgt. Anschließend kann dann die geeignete Beschichtung der Oberfläche der Windungen mit einer Isolierschicht erfolgen, die für eine elektrische Isolation der einzelnen Windungen gegeneinander und zum Zahn oder zum Jochring sorgt. Die Beschichtung sollte dabei so ausgelegt sein, dass eine sich anschließende plastische Verformung der Spule in die Endkontur sicher ertragen werden kann.

Gegenüber den aus dem Stand der Technik bekannten Verfahren zum Herstellen elektrotechnischer Spulen und/oder elektromagnetischer Spulen hat die vorliegende Erfindung eine Reihe wesentlicher Vorteile: Die erfindungsgemäß gießtechnisch hergestellten Spulen zeichnen sich durch einen maximalen Füllfaktor in der Nut bei gleichzeitiger Beibehaltung der Isolationssicherheit sowie durch eine Gewicht- und Bauraumreduktion aus. Dabei können erfindungsgemäß Füllfaktoren bis zu 95 % und mehr erreicht werden.

Darüber hinaus bewirkt die Erfindung die Einbeziehung der einzelnen Windungen in die Konstruktion und die Auslegung der Spulengeometrie für eine bedarfsgerechte Spulenkonstruktion bei gleichzeitig reduzierten Restriktionen hinsichtlich Geometrie und Fertigung.

Schließlich wird durch die flache, senkrecht zum Zahn angeordnete Leitergeometrie die Widerstandserhöhung infolge der Stromverdrängung bei hohen Frequenzen minimiert. Dies führt bei Elektromotoren zu geringeren Verlusten insbesondere bei höheren Drehzahlen und damit zu einer Steigerung des Wirkungsgrads.

Die spezifische Gefügestruktur der gießtechnisch hergestellten Spulenwicklungen lässt sich dabei eindeutig strukturell von auf andere Art und Weise (z.B. Drahtziehen) hergestellten Spulen unterscheiden. Die entsprechende Unterscheidung kann beispielsweise mittels metallographischer Verfahren (z.B. metallographischer Schliffe) geführt werden.

Ein vorteilhaftes technisches Anwendungsgebiet der vorliegenden Erfindung sind permanentmagneterregte Synchronmaschinen mit Zahnspulenwicklungen. Diese können mit der vorliegenden Erfindung deutlich besser auf die typischerweise geforderten hohen Drehmomentdichten, also die Bereitstellung eines sehr hohen Drehmoments bei gleichzeitig geringem Gewicht und Bauraumbedarf, im Einsatz als Traktionsmotoren in Fahrzeugen ausgelegt werden.

Ein weiteres vorteilhaftes Anwendungsgebiet der vorliegenden Erfindung sind Elektromagnete, beispielsweise in der Anwendung als Hubmagnet, bei denen die Gewichtsvorteile durch bessere Ausnutzung der Spulenwicklungen einen entscheidenden Vorteil bringen.

IV.3. Ausführungsbeispiel:

Nachfolgend wird die vorliegende Erfindung anhand eines Ausführungsbeispiels beschrieben:
Es zeigen:

Fig. 1: eine Motorgeometrie, in der eine erfindungsgemäße Spule eingesetzt ist bzw. eingesetzt werden kann.

Fig. 2: einen Querschnitt durch die Motorgeometrie aus Fig. 1 und durch eine erfindungsgemäße Spule in der Querschnittsebene der Spulenwindungen.

Fig. 3: eine dreidimensionale Ansicht einer erfindungsgemäß hergestellten Spule nach dem Guss, also in Spulenvorgeometrie.

Fig. 4: Schnittansichten der Spule aus Fig. 3.

Fig. 1 zeigt die Motorgeometrie einer erfindungsgemäßen Drehstrom-Synchronmaschine und eine dort angeordnete, erfindungsgemäß hergestellte Spule ausschnittsweise und als Prinzipskizze. Die Drehstrom-Synchronmaschine umfasst einen Rotor und einen Stator, die konzentrisch um die Rotationsachse R (hier senkrecht zur dargestellten Ebene verlaufend) angeordnet sind und von denen hier nur der Stator (4) ausschnittsweise gezeigt ist. Der Stator (4) weist außenumfangseitig, also entlang eines Kreises (hier gezeigt: Kreisbogenabschnitt B) um die Rotationsachse R verlaufend in regelmäßigen Abständen Vorsprünge in Form von Zähnen (3) auf. Zwischen benachbarten Zähnen (3) sind somit Nuten (5) des Stators ausgebildet, die, um einen optimalen Füllgrad zu erzielen, möglichst vollständig mit den Spulenwicklungen (2) (hier nicht gezeigt) auszufüllen sind.

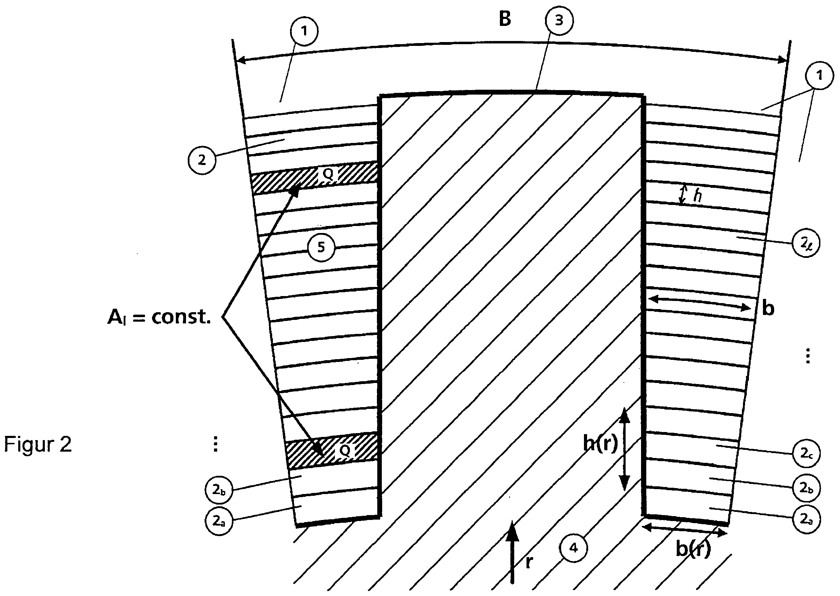

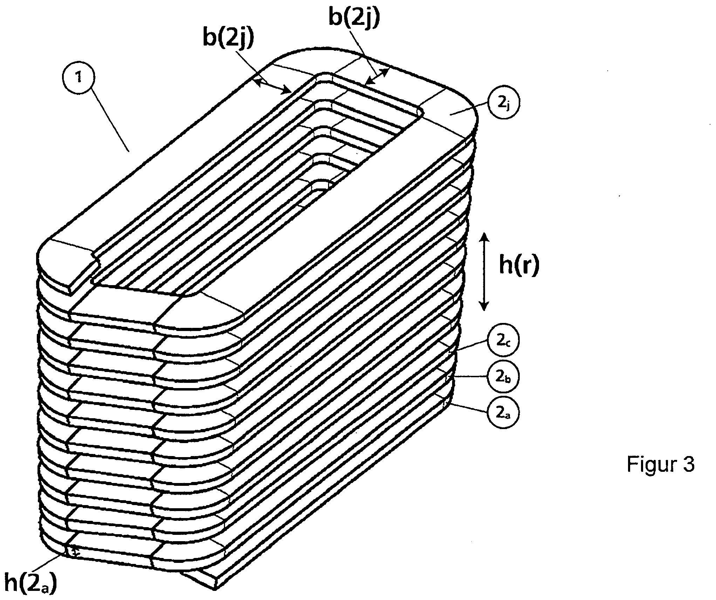

Fig. 2 und Fig. 3 zeigen nun in einer Querschnittsebene senkrecht zur Rotationsachse R (Fig. 2) und in einer Aufsicht (Fig. 3) anhand eines Zahns (3) des Stators (4) und zweier ihm unmittelbar benachbarter Nuten (5), wie erfindungsgemäß ein optimierter Füllgrad erzielt werden kann. Wie Fig. 3 zeigt, wird erfindungsgemäß eine Spule (1) mit einer Vielzahl von Wicklungen (2) (die einzelnen Wicklungen sind hier durchnummeriert und mit 2a, 2b ... bezeichnet) in Form einer eckigen Spirale mit flacher Wicklungsquerschnittsgeometrie im Feingussverfahren hergestellt. Die hierzu verwendete Negativform ist nicht gezeigt. Das Spulenmaterial ist hier Kupfer.

Wie dem Querschnitt in Fig. 2 und der dreidimensionalen Ansicht in Fig. 3 zu entnehmen ist, nimmt die Höhe h der einzelnen in den Nuten (5) angeordneten Spulenwindungen 2a, 2b, ... mit zunehmendem radialen Abstand r von der Rotationsachse R (letztere ist hier nicht gezeigt) ab. Die Spulengeometrie bzw. die Negativform berücksichtigt somit, dass mit zunehmendem radialen Abstand von der Rotationsachse die Breite der zwischen zwei benachbarten Zähnen des Stators (4) gelegenen Nuten (5) zunimmt. Als Breite ist hier der (vom radialen Abstand r abhängige) Abstand benachbarter Zähne (3) des Stators (4) bezeichnet, also die mit zunehmendem radialen Abstand r zunehmende Ausdehnung der Nut (5) in einer Richtung senkrecht zur Rotationsachse R und tangential zum Kreisbogenabschnitt B bzw. zur Außenfläche des Stators (4).

Um eine konstante Stromdichte in den einzelnen Spulenwicklungen (2) zu gewährleisten, ist der Wicklungsquerschnitt $A_1$ bzw. Q der einzelnen Wicklungen (2) konstant. Da jedoch die Breite b der einzelnen Wicklungen mit zunehmendem radialen Abstand r von der Rotationsachse R zunehmen muss, damit, wie hier, die lichte Nutfläche (5) über den gesamten radialen Abstandsbereich der Nut (5) vollständig ausgefüllt ist, mit zunehmendem radialen Abstand r die Höhe h der einzelnen Spulenwicklungen (2), also deren Ausdehnung in Radialrichtung abnehmen. Die Breite b(r) der Spulenwicklungen stellt somit eine monoton mit r wachsende Funktion dar, die Höhe h(r) eine mit wachsendem r monoton fallende Funktion. Das vorstehende gilt für die in den Figuren 1 und 2 gezeigte Außenläuferbauweise, bei der hier nicht gezeigten Innenläuferbauweise ist dementsprechend eine entsprechende Zunahme der Höhe h und eine Abnahme der Breite b notwendig.

Um eine optimale Anpassung an die Form der Nuten (5) zu erzielen, können die einzelnen Wicklungen (2) gemäß des Radius r desjenigen Kreisbogenabschnitts B um die Rotationsachse R, auf dem sie angeordnet sind, gekrümmt sein. Ebenso sind jedoch auch trapezförmige Querschnitte E der einzelnen Windungen möglich. Die dünne Isolationsummantelung der einzelnen Spulenwicklungen (2) ist hier nicht gezeigt.

Während Fig. 2 eine erfindungsgemäße Spule 1 in Spulenendgeometrie zeigt, zeigt Fig. 3 eine dreidimensionale Ansicht auf die Spule in Fig. 2 vor der Umformung in die Endgeometrie, also in Spulenvorgeometrie (und vor dem Aufbringen der dünnen Isolationsummantelung). Die einzelnen Windungen sind hier mit 2a, 2b, ... bezeichnet, die mit zunehmendem Abstand r bzw. zunehmender Höhe h zunehmende Breite b der einzelnen Wicklungen (2) ist hier beispielhaft für die oberste, außenliegende Wicklung 2j mit b(2j) bezeichnet. Typische Werte der Querschnittsfläche können 8 oder 10 mm² sein, entsprechend eine Höhe von 2 mm und eine Breite von 4 mm.

Die Anpassung sowohl der Höhe h, als auch der Breite b der einzelnen Wicklungen an ihre spätere Position in der Nut (5) zusammen mit der flachen Form der einzelnen Wicklungsquerschnitte E mit jeweils konstanter Fläche Q (die Breite b der Spule ist hier bereits für die unterste Spulenwicklung 2a um mehr als den Faktor 3 größer als die zugehörige Spulenhöhe h) erlauben hier einen erfindungsgemäßen Füllgrad von 93 %.

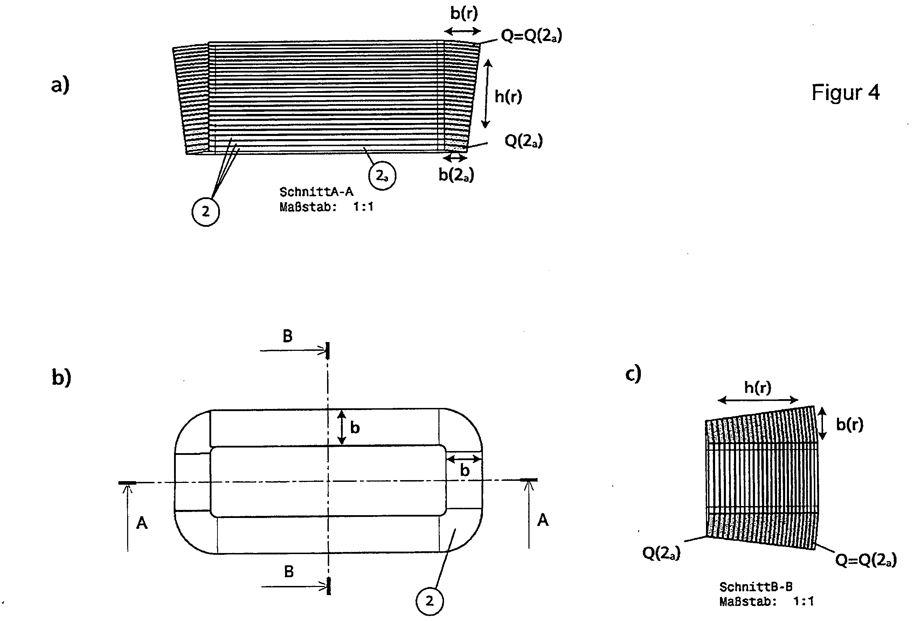

Fig. 4 zeigt schließlich drei verschiedene Aufsichten bzw. Querschnitte durch die in der Fig. 2 gezeigte Spule, also die Spule in Endgeometrie: Fig. 4b zeigt eine Aufsicht von oben auf den Zahn (3) (hier nicht gezeigt), also entgegen der Radialrichtung r, Fig. 4a zeigt einen Schnitt in einer Ebene parallel zur Rotationsachse und parallel zur Radialrichtung r und Fig. 4c zeigt einen Schnitt senkrecht zur Rotationsachse und parallel zur Radialrichtung r.

Die erfindungsgemäßen Spulen des Ausführungsbeispiels in den Figuren 1 bis 4 können beispielsweise im Feinguss wie folgt hergestellt werden:

1. Konstruktion der Spulenendgeometrie mittels CAD.

2. Auseinanderziehen der Spulengeometrie in der Rechnersimulation mittels Finite-Elemente-Verfahren auf den gewünschten Abstand der Spulenvorgeometrie (beispielsweise 2 mm) .

3. Fertigung der Spulenvorgeometrie als Modell mittels Rapid Prototyping-Verfahren in einem ausbrennbaren Modellwerkstoff.

4. Einbetten in eine geeignete Formmasse.

5. Abguss des leitenden Spulenwerkstoffs (beispielsweise: Kupfer).

6. Ausbetten und Säubern des Abgusses.

7. Weichglühen.

8. Zusammenpressen in die Spulenendgeometrie.

9. Aufbringen der Isolation (beispielsweise durch Eintauchen in Isolationslack oder durch einen Beschichtungsprozess).

Schritte 8. und 9. können dabei auch in umgekehrter Reihenfolge notwendig sein bzw. durchgeführt werden. Einzelne der vorgenannten Verfahrensschritte können sich bei anderen Gießverfahren (beispielsweise: Druckguss) abändern oder auch ganz wegfallen.

**Patentansprüche**

**1.** Verfahren zum Herstellen einer elektrotechnischen Spule (1) mit einer oder mehrerer Windung (en) (2), wobei eine eine Spulengeometrie enthaltende Negativform, insbesondere eine verlorene Form oder eine Dauerform, bereitgestellt oder hergestellt wird, wobei ein zur Ausbildung der Windung(en) geeignetes Spulenmaterial, insbesondere ein elektrisch leitfähiges Metall, in flüssiger Form in diese Negativform gegossen wird und/oder mit Druckunterstützung in diese Negativform eingebracht wird, und wobei dieses Spulenmaterial erstarrt wird und/oder man dieses Spulenmaterial erstarren lässt, *dadurch gekennzeichnet, dass* die Spule (1) zumindest abschnittsweise zum formschlüssigen Umfassen, Umgreifen, Umringen und/oder Umwickeln eines Vorsprungs, insbesondere eines Zahns (3) eines Stators (4), und/oder zumindest abschnittsweise zum formschlüssigen Einbringen in eine Vertiefung (5) und/oder einen Hohlraum, insbesondere in eine Nut eines/des Stators (4), ausgebildet wird und so ausgebildet wird, dass mit zunehmendem radialen Abstand (r) von der Rotationsachse (R) und/oder vom Zentrum des Stators (4) die nachfolgend als Höhe (h) bezeichnete Ausdehnung von Windungen (2) der Spule (1) in Radialrichtung (r) so abnimmt und die nachfolgend als Breite (b) bezeichnete Ausdehnung (b) dieser Windungen (2) der Spule (1) in einer Richtung in der Querschnittsebene (E) der Wicklungen und senkrecht zur Radialrichtung so zunimmt, dass diese Windungen (2) der Spule (1) eine konstante Querschnittsfläche (Q) aufweisen.

**2.** Verfahren nach dem vorhergehenden Anspruch *dadurch gekennzeichnet, dass* das erstarrte Spulenmaterial mit einer Isolation, bevorzugt einer Isolationsschicht, zum elektrischen Isolieren der Spule ummantelt wird, insbesondere beschichtet wird, und/oder dass die durch die in der Negativform enthaltene Spulengeometrie bedingte geometrische Ausgangsform des erstarrten Spulenmaterials (Spulenvorgeometrie) in/zu eine(r) von dieser Ausgangsform abweichende(n) geometrische(n) Endform (Spulenendgeometrie) umgeformt wird, insbesondere zusammen gepresst wird oder auseinander gezogen wird, wobei bevorzugt zunächst wie vorstehend beschrieben ummantelt und anschließend wie vorstehend beschrieben umgeformt wird.

**3.** Verfahren nach dem vorhergehenden Anspruch *dadurch gekennzeichnet, dass* das in Spulenvorgeometrie vorliegende, erstarrte Spulenmaterial zum Erzielen einer vereinfachten Umformbarkeit einer Wärmebehandlung, insbesondere einem Weichglühen, unterzogen wird, bevor das so wärmebehandelte Spulenmaterial mit der Isolationsschicht ummantelt und anschließend in die Spulenendgeometrie umgeformt wird und/oder dass das Ummanteln des Spulenmaterials mit der Isolationsschicht durch Aufbringen einer Isolationsbeschichtung, bevorzugt durch Eintauchen in einen Isolationslack, durch chemische Gasphasenabscheidung (CVD) oder durch physikalische Gasphasenabscheidung (PVD) erfolgt.

**4.** Verfahren nach einem der vorhergehenden Ansprüche *dadurch gekennzeichnet, dass* die Herstellung im Druckguss, Feinguss, Kokillenguss, Sandguss, im Schleuderguss, im Vakuumguss, im Niederdruckguss und/oder im Lost Foam-Verfahren erfolgt.

**5.** Verfahren nach einem der vorhergehenden Ansprüche *dadurch gekennzeichnet, dass* der der in der Negativform enthaltenen Spulengeometrie entsprechende Hohlraum so evakuiert oder so mit einem Unterdruck beaufschlagt wird, dass eine Druckdifferenz entsteht, die das in flüssiger Form vorliegende Spulenmaterial in diesen Hohlraum hinein drückt, und/oder dass ein zum Einleiten des in flüssiger Form vorliegenden Spulenmaterials in den der in der Negativform enthaltenen Spulengeometrie entsprechenden Hohlraum verwendeter Schmelztiegel in einer Schutzgasatmosphäre betrieben wird.

6.  Verfahren nach einem der vorhergehenden Ansprüche
    *dadurch gekennzeichnet, dass*
    die Spule (1) formschlüssig so in eine Vertiefung (5) und/oder einen Hohlraum, insbesondere in eine Nut eines Stators (4), eingebracht wird, dass sie einen der Vertiefung und/oder dem Hohlraum benachbarten Vorsprung, insbesondere einen Zahn (3) dieses Stators (4), zumindest abschnittsweise umfasst, umgreift, umringt und/oder umwickelt.

7.  Elektrotechnische Spule (1) mit einer oder mehrerer Windung(en) (2),
    *hergestellt durch*
    das Gießen und/oder das Einbringen mit Druckunterstützung eines zur Ausbildung der Windung (en) geeigneten Spulenmaterials, insbesondere eines elektrisch leitfähigen Metalls, in eine eine Spulengeometrie enthaltende Negativform, insbesondere eine verlorene Form oder eine Dauerform, und das Erstarren und/oder das Erstarrenlassen dieses Spulenmaterials,
    *dadurch gekennzeichnet, dass*
    die Spule (1) zumindest abschnittsweise zum formschlüssigen Umfassen, Umgreifen, Umringen und/oder Umwickeln eines Vorsprungs, insbesondere eines Zahns (3) eines Stators (4), und/oder zumindest abschnittsweise zum formschlüssigen Einbringen in eine Vertiefung (5) und/oder einen Hohlraum, insbesondere in eine Nut eines/des Stators (4), so ausgebildet ist, dass mit zunehmendem radialen Abstand (r) von der Rotationsachse (R) und/oder vom Zentrum des Stators (4) die nachfolgend als Höhe (h) bezeichnete Ausdehnung von Windungen (2) der Spule (1) in Radialrichtung (r) so abnimmt und die nachfolgend als Breite (b) bezeichnete Ausdehnung (b) dieser Windungen (2) der Spule (1) in einer Richtung in der Querschnittsebene (E) der Wicklungen und senkrecht zur Radialrichtung so zunimmt, dass diese Windungen (2) der Spule (1) eine konstante Querschnittsfläche (Q) aufweisen.

8.  Elektrotechnische Spule (1) nach dem vorhergehenden Anspruch
    *hergestellt durch*
    das Ummanteln, insbesondere das Beschichten, des erstarrten Spulenmaterials mit einer Isolation, insbesondere einer Isolationsschicht, zum elektrischen Isolieren der Windung(en)
    und/oder
    das Umformen, insbesondere das Zusammenpressen oder Auseinanderziehen, der durch die in der Negativform enthaltene Spulengeometrie bedingten geometrischen Ausgangsform des erstarrten Spulenmaterials (Spulenvorgeometrie) in/zu eine(r) von dieser Ausgangsform abweichende(n) geometrische(n) Endform (Spulenendgeometrie), wobei bevorzugt zunächst das vorstehend beschriebene Ummanteln und anschließend das vorstehend beschriebene Umformen erfolgt.

9.  Elektrotechnische Spule (1) nach einem der beiden vorhergehenden Ansprüche
    *dadurch gekennzeichnet, dass*
    mehrere, bevorzugt alle Windungen (2) der Spule (1) abschnittsweise mit ihrer Windungsquerschnittsebene (E) entlang eines Kreisbogenabschnitts (B) um die Rotationsachse (R) herum verlaufen
    und/oder
    dass bei mehreren, bevorzugt allen Windungen (2) der Spule (1) die Breite (b) größer ist, als die Höhe (h), wobei jeweils die Breite (b) bevorzugt um mindestens den Faktor zwei größer ist, als die jeweilige Höhe (h).

10. Elektromaschine oder elektrotechnische Anordnung, insbesondere Elektromotor, aufweisend mindestens eine elektrotechnische Spule nach einem der drei vorhergehenden Ansprüche.

11. Drehstrom-Synchronmaschine, insbesondere permanentmagneterregte Synchronmaschine in Zahnspulentechnologie, mit mindestens einem Rotor und einem Stator (4)
    *dadurch gekennzeichnet, dass*
    in den Stator (4) Vorsprünge, insbesondere Zähne (3), des Stators (4) ausbildende Vertiefungen (5) und/oder Hohlräume, insbesondere Nuten, eingebracht sind und dass in diesen Vertiefungen und/oder Hohlräumen jeweils elektrotechnische Spulen (1) nach einem der vier vorhergehenden Spulenansprüche zumindest abschnittsweise formschlüssig so angeordnet sind, dass sie die Vorsprünge zumindest abschnittsweise umfassen, umgreifen, umringen und/oder umwickeln.

**Claims**

1.  Method for the production of an electrotechnical coil (1) having one or more winding(s) (2),
    a female mould comprising a coil geometry, in particular a broken mould or a permanent mould, being provided or produced,
    a coil material which is suitable for forming the winding(s), in particular an electrically conductive metal, being poured into this female mould in liquid form and/or being introduced into this female mould with pressure assistance, and this coil material being solidified
    and/or this coil material being made to solidify,
    *characterised in that*
    the coil (1) is configured, at least in portions, for form-fitting encircling, encompassing, surrounding and/or winding around a projection, in particular a tooth (3) of a stator (4), and/or, at least in portions, for form-fitting introduction into a recess (5) and/or into a cavity, in particular into a groove of a/the stator (4), and is configured such that, with increasing radial spacing (r) from the axis of rotation (R) and/or from the centre of the stator (4), the extension of windings (2) of the coil (1), subsequently termed height (h), reduces in radial direction (r) and the extension (b) of these windings (2) of the coil (1), subsequently termed width (b), increases in a direction in the cross-sectional plane (E) of the windings and perpendicular to the radial direction such that these windings (2) of the coil (1) have a constant cross-sectional area (Q).

2. Method according to the preceding claim, *characterised in that*
the solidified coil material is covered, in particular is coated, with insulation, preferably a layer of insulation, for electrical insulation of the coil,
and/or
**in that** the geometric initial shape of the solidified coil material (coil pre-geometry) which is caused by the coil geometry present in the female mould is shaped into/to form a geometric end shape (coil end geometry) which deviates from this initial shape, in particular is compressed together or drawn apart, preferably firstly being covered, as described above, and subsequently being shaped, as described above.

3. Method according to the preceding claim, *characterised in that*
the solidified coil material present in the coil pre-geometry, in order to achieve a simplified shapeability, is subjected to a heat treatment, in particular soft-annealing, before the thus heat-treated coil material is covered with the layer of insulation and subsequently is shaped into the coil end geometry,
and/or
**in that** the covering of the coil material with the layer of insulation is effected by applying an insulation coating, preferably by immersion in an insulating varnish, by chemical vapour phase deposition (CVD) or by physical vapour phase deposition (PVD).

4. Method according to one of the preceding claims, *characterised in that*
the production is effected in pressure casting, precision casting, permanent-mould casting, sand casting, in centrifugal casting, in vacuum casting, in low-pressure casting and/or in the lost-foam process.

5. Method according to one of the preceding claims, *characterised in that*
the cavity corresponding to the coil geometry present in the female mould is evacuated or is subjected to low pressure such that a pressure difference is produced, which presses the coil material present in liquid form into this cavity,
and/or
**in that** a crucible which is used for introducing the coil material present in liquid form into the cavity corresponding to the coil geometry present in the female mould is operated in a protective gas atmosphere.

6. Method according to one of the preceding claims, *characterised in that*
the coil (1) is introduced, in a form-fit, into a recess (5) and/or into a cavity, in particular into a groove of a stator (4), such that it encircles, encompasses, surrounds and/or winds around a projection which is adjacent to the recess and/or the cavity, in particular a tooth (3) of this stator (4), at least in portions.

7. Electrotechnical coil (1) having one or more winding(s) (2),
*produced by*
pouring and/or introducing, with pressure assistance, a coil material which is suitable for forming the winding(s), in particular an electrically conductive metal, into a female mould comprising a coil geometry, in particular a broken mould or a permanent mould, and solidifying and/or making this coil material solidify,
*characterised in that*
the coil (1) is configured, at least in portions, for form-fitting encircling, encompassing, surrounding and/or winding around a projection, in particular a tooth (3) of a stator (4), and/or, at least in portions, for form-fitting introduction into a recess (5) and/or into a cavity, in particular into a groove of a/the stator (4), and such that, with increasing radial spacing (r) from the axis of rotation (R) and/or from the centre of the stator (4), the extension of windings (2) of the coil (1), subsequently termed height (h), reduces in radial direction (r), and the extension (b) of these windings (2) of the coil (1), subsequently termed width (b), increases in a direction in the cross-sectional plane (E) of the windings and perpendicular to the radial direction such that these windings (2) of the coil (1) have a constant cross-sectional area (Q).

8. Electrotechnical coil (1) according to the preceding claim,
*produced by*
covering, in particular coating, of the solidified coil material with insulation, in particular a layer of insulation, for electrical insulation of the winding(s)
and/or
shaping, in particular, compressing together or drawing apart, of the geometric initial shape of the solidified coil material (coil pre-geometry) which is caused by the coil geometry present in the female mould into/to form a geometric end shape (coil end geometry) which deviates from this initial shape,

preferably firstly the above-described covering and subsequently the above-described shaping being effected.

9.  Electrotechnical coil (1) according to one of the two preceding claims,
    *characterised in that*
    a plurality, preferably all, of the windings (2) of the coil (1) extend, in portions, with their winding cross-sectional plane (E) along a circular arc portion (B) about the axis of rotation (R),
    and/or
    **in that**, in the case of a plurality, preferably all, of the windings (2) of the coil (1), the width (b) is greater than the height (h), respectively the width (b) being greater, preferably by at least the factor two, than the respective height (h).

10. Electrical machine or electrotechnical arrangement, in particular electric motor, having at least one electrotechnical coil according to one of the three preceding claims.

11. Three-phase synchronous motor, in particular permanent-magnet-excited synchronous machine in toothed coil technology, having at least one rotor and one stator (4),
    *characterised in that*
    recesses (5) and/or cavities, in particular grooves, which form projections, in particular teeth (3), of the stator (4) are introduced into the stator (4) and **in that**, in these recesss and/or cavities, respectively electrotechnical coils (1), according to one of the four preceding coil claims, are disposed in a form-fit, at least in portions, such that they encircle, encompass, surround and/or wind around the projections, at least in portions.

**Revendications**

1.  Procédé de fabrication d'une bobine électrotechnique (1) avec un ou plusieurs enroulement(s) (2),
    un moule négatif contenant une géométrie de bobine, plus particulièrement un moule perdu ou un moule permanent, étant mis à disposition ou fabriqué,
    un matériau de bobine conçu pour la réalisation de l'enroulement ou des enroulements, plus particulièrement un métal électro-conducteur, étant coulé sous forme liquide dans ce moule négatif et/ou étant introduit sous pression dans ce moule négatif et ce matériau de bobine étant solidifié et/ou on provoque la solidification de ce matériau de bobine,
    **caractérisé en ce que**
    la bobine (1) étant conçue au moins partiellement pour inclure, envelopper, entourer et/ou s'enrouler par complémentarité de forme autour d'une saillie, plus particulièrement une dent (3) d'un stator (4),
    et/ou au moins partiellement pour l'insertion par complémentarité de forme dans une cavité (5) et/ou un espace creux, plus particulièrement dans une rainure d'un / du stator (4), et étant conçue de façon à ce que, lorsque la distance radiale (r) par rapport à l'axe de rotation (R) et/ou par rapport au centre du stator (4) augmente, l'extension, appelée ci-après hauteur (h), des enroulements (2) de la bobine (1) diminue dans la direction radiale (r) et l'extension, appelée ci-après largeur (b), de ces enroulements (2) de la bobine (1) augmente dans une direction dans le plan de la section transversale (E) des enroulements et perpendiculairement à la direction radiale de façon à ce que ces enroulements (2) de la bobine (1) présentent une surface de section transversale (Q) constante.

2.  Procédé selon la revendication précédente,
    **caractérisé en ce que**
    le matériau de bobine solidifié est enrobé, plus particulièrement revêtu, d'une isolation, de préférence une couche d'isolation, pour l'isolation électrique de la bobine,
    et/ou
    la forme géométrique initiale du matériau de bobine solidifié (géométrie de bobine initiale), due à la géométrie de bobine contenue dans le moule négatif, est façonnée, plus particulièrement est comprimée ou étirée, afin d'obtenir une forme finale géométrique différente de cette forme initiale (géométrie de bobine finale), de préférence cette forme étant enrobée comme décrit précédemment puis façonnée comme décrit précédemment.

3.  Procédé selon la revendication précédente,
    **caractérisé en ce que**
    le matériau de bobine solidifié existant dans la géométrie de bobine initiale est soumis, afin de faciliter le façonnage, à un traitement thermique, plus particulièrement à un recuit, avant que le matériau de bobine ainsi traité thermiquement soit enrobé avec la couche d'isolation puis façonné afin d'obtenir la géométrie de bobine finale,
    et/ou
    l'enrobage du matériau de bobine avec la couche d'isolation a lieu par application d'un revêtement d'isolation, de préférence par immersion dans un vernis d'isolation, par dépôt chimique en phase gazeuse (CVD) ou par dépôt physique en phase gazeuse (PVD).

4.  Procédé selon l'une des revendications précédentes,
    **caractérisé en ce que**
    la fabrication a lieu par moulage sous pression, coulée de précision, coulée de lingotière, moulage au sable, moulage par centrifugation, moulage sous vide, moulage basse pression et/ou moulage « Lost Foam ».

**5.** Procédé selon l'une des revendications précédentes,
**caractérisé en ce que**
l'espace creux correspondant à la géométrie de bobine contenue dans le moule négatif est soumis à un vide ou à une dépression, de façon à ce qu'une différence de pression apparaisse qui comprime le matériau de bobine existant sous forme liquide vers cet espace creux,
et/ou
un creuset de fusion utilisé pour l'introduction du matériau de bobine existant sous forme liquide dans l'espace creux correspondant à la géométrie de bobine contenue dans le moule négatif est utilisé sous une atmosphère protectrice.

**6.** Procédé selon l'une des revendications précédentes,
**caractérisé en ce que**
la bobine (1) est introduite par complémentarité de forme dans une cavité (5) et/ou un espace creux, plus particulièrement dans une rainure d'un stator (4), de façon à ce qu'elle inclue, enveloppe, entoure et/ou s'enroule au moins partiellement autour d'une saillie adjacente à la cavité et/ou à l'espace creux, plus particulièrement une dent (3) de ce stator (4).

**7.** Bobine électrotechnique (1) avec un ou plus enroulement(s) (2),
fabriqué par
la coulée et/ou l'introduction à l'aide d'une pression d'un matériau de bobine adapté à la réalisation de l'enroulement ou des enroulements, plus particulièrement d'un métal électro-conducteur, dans un moule négatif contenant une géométrie de bobine, plus particulièrement un moule perdu ou un moule permanent et la solidification et/ou le fait de laisser de solidifier ce matériau de bobine,
**caractérisé en ce que**
la bobine (1) est conçue au moins partiellement pour inclure, envelopper, entourer et/ou s'enrouler au moins partiellement autour d'une saillie, plus particulièrement d'une dent (3) d'un stator (4) et/ou au moins partiellement pour l'introduction par complémentarité de forme dans une cavité (5) et/ou un espace creux, plus particulièrement dans une rainure d'un ou du stator (4), de façon à ce que, lorsque la distance radiale (r) par rapport à l'axe de rotation (R) et/ou par rapport au centre du stator (4) augmente, l'extension, appelée ci-après hauteur (h), des enroulements (2) de la bobine (1) diminue dans la direction radiale (r) et l'extension, appelée ci-après largeur (b), de ces enroulements (2) de la bobine (1) augmente dans une direction dans le plan de la section transversale (E) des enroulements et perpendiculairement à la direction radiale de façon à ce que ces enroulements (2) de la bobine (1) présentent une surface de section transversale (Q) constante.

**8.** Bobine électrotechnique (1) selon la revendication précédente,
fabriquée par
l'enrobage, plus particulièrement le revêtement, du matériau de bobine solidifié avec une isolation, plus particulièrement une couche d'isolation, pour l'isolation électrique de l'enroulement ou des enroulements,
et/ou
le façonnage, plus particulièrement la compression ou l'étirement, de la forme initiale du matériau de bobine solidifié (géométrie de bobine initiale), due à la géométrie de bobine contenue dans le moule négatif, afin d'obtenir une forme géométrique finale (géométrie de bobine finale) différente de cette forme initiale, de préférence l'enrobage décrit précédemment ayant d'abord lieu puis le façonnage décrit précédemment.

**9.** Bobine électrotechnique (1) selon l'une des deux revendications précédentes,
**caractérisée en ce que**
plusieurs, de préférence tous les enroulements (2) de la bobine (1) s'étendent, avec leur plan de section transversale d'enroulements (E), le long d'une portion en arc de cercle (B) autour de l'axe de rotation (R),
et/ou
dans plusieurs, de préférence tous les enroulements (2) de la bobine (1), la largeur (b) est supérieure à la hauteur (h), la largeur (b) étant de préférence supérieure à la hauteur (h) correspondante au moins d'un facteur deux.

**10.** Machine électrique ou dispositif électrotechnique, plus particulièrement moteur électrique, comprenant au moins une bobine électrotechnique selon l'une des trois revendications précédentes.

**11.** Machine synchrone à courant triphasé, plus particulièrement machine synchrone à excitation par aimant permanent à technologie à bobines à dents, avec au moins un rotor et un stator (4),
**caractérisée en ce que**
dans le stator (4), sont insérées des saillies, plus particulièrement des dents (3), dans des cavités (5) et/ou des espaces creux, plus particulièrement des rainures constituant le stator (4), et **en ce que**, dans ces cavités et/ou espaces creux, des bobines électrotechniques (1) selon l'une des quatre revendications de bobines précédentes, sont disposées au moins partiellement par complémentarité de forme, de façon à ce qu'elles incluent, enveloppent, entourent et/ou s'enroulent autour des saillies.

Figur 1

Figur 2

Figur 3

a)

b(r)

Q=Q(2ₐ)

h(r)

Q(2ₐ)

2ₐ

b(2ₐ)

2

SchnittA-A
Maßstab: 1:1

Figur 4

b)

B

b

b

A

A

B

2

c)

h(r)

b(r)

Q(2ₐ)

Q=Q(2ₐ)

SchnittB-B
Maßstab: 1:1

EP 2 387 135 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2004336969 B

- FR 1580467

**In der Beschreibung aufgeführte Nicht-Patentliteratur**

- **QUELLE: MÜLLER ; VOGT, PONICK.** Berechnung elektrischer Maschinen. Wiley-VCH, 2008, 168